# EUROPEAN PATENT SPECIFICATION

(11) **EP 4 154 147 B1**
(45) Date of publication and mention of the grant of the patent: **24.09.2025**
(21) Application number: 20736951.3
(22) Date of filing: 29.06.2020
(51) Int. Cl.: G06F 21/60, H04L 9/40, G06F 21/62, H04L 67/1097

(54) **DATA STORAGE SERVER AND CLIENT DEVICES FOR SECURELY STORING DATA**
DATENSPEICHERSERVER UND CLIENT-VORRICHTUNGEN ZUR SICHEREN SPEICHERUNG VON DATEN
SERVEUR DE STOCKAGE DE DONNÉES ET DISPOSITIFS CLIENTS POUR STOCKAGE SÉCURISÉ DE DONNÉES

(43) Date of publication of application: 29.03.2023
(73) Proprietor: Huawei Technologies Co., Ltd., Shenzhen, Guangdong 518129 (CN)
(72) Inventor: SHEMER, Eli, 80992 Munich (DE); AKIRAV, Shay, 80992 Munich (DE)
(74) Representative: Gill Jennings & Every LLP
(86) International application number: PCT/EP2020/068266
(87) International publication number: WO 2022/002350

(56) References cited:
- US-A1- 2008 059 414
- US-A1- 2017 250 798
- US-A1- 2020 076 578

## Description

### TECHNICAL FIELD

The present disclosure relates to data storage systems. More specifically, the present disclosure relates to client devices and data storage servers for securely storing security sensitive data, including numerical data and/or textual data, and enabling range queries of the security sensitive data.

### BACKGROUND

Remote data storage, such as cloud data storage, is becoming more and more popular, because it allows user client devices, which can usually store only a limited amount of data, to save data and files in one or more remote data storage servers that can be accessed either through the public internet or a dedicated private network connection. A cloud storage provider hosts, secures, manages, and maintains the data storage servers and associated infrastructure and ensures the access of the user client devices to the data. One of the main advantages of cloud storage is that the user data may be recovered from the remote data storage servers when the data has been removed, corrupted, or otherwise becomes inaccessible on the user client device. However, as the user data that is transferred to the remote data storage servers becomes the responsibility of the cloud storage provider, security sensitive user data may potentially become accessible to the cloud storage provider, which may be undesirable for the user and/or conflict with legal regulations. Often, security sensitive data to be stored in a remote data storage server comprises security sensitive data, such as numerical or textual data, which can be queried in plaintext, but, if encrypted, cannot, as such, be easily queried using, for instance, range queries. US 2017/250798 A1 discloses a method for performing an encrypted data operation that may include generating an encrypted hierarchical path identifier corresponding to a hierarchical data space for at least one plaintext data operation that preserves the hierarchy of the hierarchical data space. US 2008/059414 A1 discloses an indexing value may be determined, transparently with respect to a requester, based on a desired plaintext item of data and a cryptographic key. The indexing value may be used to access an entry in an indexing structure to obtain a corresponding database entry which includes a non-deterministically encrypted ciphertext item. US 2020/076578 A1 discloses a method of protecting sensitive data in the cloud via indexable databases.

### SUMMARY

It is an objective of the present disclosure to provide an improved client device and an improved data storage server for secure cloud storage of data including security sensitive data, such as numerical and/or textual data, enabling range queries of the security sensitive data.

The foregoing and other objectives are achieved by the subject matter of the independent claims. Further implementation forms are apparent from the dependent claims, the description, and the figures.

According to a first aspect, a client device comprising a processor is provided. The processor of the client device is configured to obtain data comprising a plurality of plaintext data elements. The plurality of plaintext data elements can be queried in plaintext and may comprise, for instance, numerical values and/or textual data, i.e. letter strings. For a plaintext data element of the plurality of plaintext data elements, the processor of the client device is configured to:
generate with a MAC (message authentication code) key a first MAC of a first portion of a binary representation of the plaintext data element, wherein the first portion comprises one or more of most significant bits of the binary representation of the plaintext data element and the binary representation of the plaintext data element further comprises a remainder portion that is complementary to the first portion, the remainder portion comprising the remaining least significant bits of the binary representation of the plaintext data element;
retrieve, on the basis of the first MAC, a data bucket from a data storage server, wherein the data bucket comprises a data bucket header and encrypted data bucket content;
decrypt the data bucket content with an encryption key to obtain the data bucket content in plaintext;
add the remainder portion of the binary representation of the plaintext data element to the data bucket content in plaintext to obtain an updated data bucket content in plaintext;
encrypt the updated data bucket content in plaintext with the encryption key; and
send the data bucket with the encrypted updated data bucket content to the data storage server for storing the data bucket in a database of the data storage server.

Advantageously, the client device and the data storage server allow storing security sensitive data, for instance, numerical values or textual data in encrypted form in the database, while enabling range queries of the data.

In a further possible implementation form of the first aspect, the processor of the client device is further configured, for the plaintext data element of the plurality of plaintext data elements, to generate, using the MAC key, a second MAC of a second portion of the binary representation of the plaintext data element, wherein the second portion comprises one or more further most significant bits of the binary representation of the plaintext data element than the first portion and the remainder portion of the binary representation of the plaintext data element is complementary to the second portion. Moreover, the client device is configured to retrieve the data bucket on the basis of the first MAC and the second MAC from the data storage server.

In a further possible implementation form of the first aspect, the processor of the client device is further configured, for the plaintext data element of the plurality of plaintext data elements, to generate, using the MAC key, a third MAC of a third portion of the binary representation of the plaintext data element, wherein the third portion comprises one or more further most significant bits of the binary representation of the plaintext data element than the second portion and the remainder portion of the binary representation of the plaintext data element is complementary to the third portion. Moreover, the client device is configured to retrieve the data bucket on the basis of the first MAC, the second MAC, and the third MAC from the data storage server.

In a further possible implementation form of the first aspect, the processor of the client device is further configured to encrypt the plurality of plaintext data elements with the encryption key to obtain a plurality of cyphertext data elements, and send the data, including the plurality of cyphertext data elements, to the data storage server for storing the data in the database. In an implementation form, the database is a relational database, wherein the data storage server is configured to store the data, including the plurality of cyphertext data elements, in a table of the relational database.

In a further possible implementation form of the first aspect, the processor of the client device is further configured to send an identifier of the encryption key with the data, including the plurality of cyphertext data elements, to the data storage server for storing the data on the basis of the identifier of the encryption key in the database. In other words, based on the identifier of the encryption key, the data storage server is configured to determine where in the database to store the plurality of cyphertext data elements.

In a further possible implementation form of the first aspect, the first MAC is a hash-based message authentication code, HMAC.

In a further possible implementation form of the first aspect, the first portion of the binary representation of the plaintext data element comprises one or more bytes defined by the most significant bits of the binary representation of the plaintext data element and the remainder portion of the binary representation of the plaintext data element comprises one or more bytes defined by the least significant bits of the binary representation of the plaintext data element.

In a further possible implementation form of the first aspect, the processor of the client device is further configured to obtain at least one of an encrypted version of the encryption key and an encrypted version of the MAC key from a remote key management server, wherein at least one of the encrypted version of the encryption key and the encrypted version of the MAC key is encrypted with a client device master key.

In a further possible implementation form of the first aspect, the processor of the client device is further configured to send at least one of the encrypted version of the encryption key and the encrypted version of the MAC key to the data storage server. In an implementation form, the encrypted encryption key can serve as the identifier of the encryption key for storing the data, including the plurality of cyphertext data elements, on the basis of the identifier in the database, in particular in the table of the database.

In a further possible implementation form of the first aspect, for processing a data query of the data, including the plurality of cyphertext data elements, stored in the database of the data storage server, wherein the data query is defined by at least one query value, the processor of the client device is further configured to:
generate, using the MAC key, at least one first query MAC of a first portion of a binary representation of the at least one query value, wherein the first portion comprises one or more of most significant bits of the binary representation of the query value and the binary representation of the query value further comprises a complementary remainder portion defined by the remaining least significant bits of the binary representation of the query value;
retrieve, on the basis of the at least one first query MAC, one or more data buckets from the data storage server, wherein each of the one or more data buckets comprises a data bucket header and encrypted data bucket content;
decrypt the encrypted data bucket content with the encryption key; and
generate a plaintext binary representation of a data element by combining the first portion with the decrypted complementary remainder portion.

In a further possible implementation form of the first aspect, for each data bucket, the data bucket content further comprises, for each cyphertext data element of the data bucket content, a storage location identifier, in particular a row identifier, for identifying a storage location of data associated with the respective cyphertext data element in the database, wherein, for retrieving the cyphertext data element and/or the data associated with the data elements of the queried range from the database, the processor of the client device is further configured to retrieve, for one or more data elements matching the data query, the cyphertext data element and/or the data associated with the one or more data elements from the database on the basis of the storage location identifier.

According to a second aspect, a method of operating a client device is provided, the method comprising the steps of:
obtaining data comprising a plurality of plaintext data elements; and, for a plaintext data element of the plurality of plaintext data elements:
generating, using a message authentication code, MAC, key, a first MAC of a first portion of a binary representation of the plaintext data element, wherein the first portion comprises one or more of most significant bits of the binary representation of the plaintext data element and the binary representation of the plaintext data element further comprises a remainder portion that is complementary to the first portion, the remainder portion comprising the remaining least significant bits of the binary representation of the plaintext data element;
retrieving, on the basis of the first MAC, a data bucket from a data storage server, wherein the data bucket comprises a data bucket header and encrypted data bucket content;
decrypting the data bucket content with an encryption key to obtain the data bucket content in plaintext;
adding the remainder portion of the binary representation of the plaintext data element to the data bucket content in plaintext to obtain an updated data bucket content in plaintext;
encrypting the updated data bucket content in plaintext with the encryption key; and
sending the data bucket with the encrypted updated data bucket content to the data storage server for storing the data bucket in a database of the data storage server.

The method according to the second aspect of the present disclosure can be performed by the client device according to the first aspect of the present disclosure. Thus, further features of the method according to the second aspect of the present disclosure result directly from the functionality of the client device according to the first aspect of the present disclosure as well as its different implementation forms described above and below.

According to a third aspect, a data storage server comprising a processor is provided. The processor of the data storage server is configured to:
receive from a client device a first message authentication code, MAC, of a first portion of a binary representation of a plaintext data element based on a MAC key, wherein the first portion comprises one or more of most significant bits of the binary representation of the plaintext data element and the binary representation of the plaintext data element further comprises a remainder portion that is complementary to the first portion, the remainder portion comprising the remaining least significant bits of the binary representation of the plaintext data element;
select on the basis of the first MAC a data bucket stored in a database of the data storage server;
provide the data bucket to the client device, wherein the data bucket comprises a data bucket header and encrypted data bucket content;
receive the data bucket with an updated encrypted data bucket content from the client device; and
store the data bucket with the updated encrypted data bucket content in the database, wherein the updated encrypted data bucket content comprises the remainder portion of the binary representation of the plaintext data element in encrypted form based on an encryption key.

Advantageously, the data storage server according to the third aspect and the client device according to the first aspect allow storing security sensitive data, for instance, numerical values and/or textual data in encrypted form in the database, while enabling range queries of the data.

In a further possible implementation form of the third aspect, the processor of the data storage server is further configured to:
receive from the client device a second MAC of a second portion of the binary representation of the plaintext data element based on the MAC key, wherein the second portion comprises one or more further most significant bits of the binary representation of the plaintext data element than the first portion and the remainder portion of the binary representation of the plaintext data element is complementary to the second portion; and
select on the basis of the first MAC and the second MAC the data bucket stored in the database and provide the data bucket to the client device.

In a further possible implementation form of the third aspect, the processor of the data storage server is further configured to:
receive from the client device a third MAC of a third portion of the binary representation of the plaintext data element based on the MAC key, wherein the third portion comprises one or more further most significant bits of the binary representation of the plaintext data element than the second portion and the remainder portion of the binary representation of the plaintext data element is complementary to the third portion; and
select, on the basis of the first MAC, the second MAC, and the third MAC, the data bucket stored in the database and provide the data bucket to the client device.

In a further possible implementation form of the third aspect, the processor of the data storage server is further configured to receive data, including a plurality of cyphertext data elements encrypted with the encryption key, from the client device and store the data, including the plurality of cyphertext data elements encrypted with the encryption key, in the database.

In a further possible implementation form of the third aspect, the processor of the data storage server is further configured to receive an identifier of the encryption key with the data, including the plurality of cyphertext data elements, from the client device and store the data on the basis of the identifier of the encryption key in the database. In other words, based on the identifier of the encryption key, the data storage server may determine where in the database to store the plurality of cyphertext data elements.

In a further possible implementation form of the third aspect, the database is a relational database, wherein the processor of the data storage server is further configured to store the data, including the plurality of cyphertext data elements, in a table of the relational database.

In a further possible implementation form of the third aspect, the first MAC is a hash-based message authentication code, HMAC.

In a further possible implementation form of the third aspect, the first portion of the binary representation of the plaintext data element comprises one or more bytes defined by the most significant bits of the binary representation of the plaintext data element and the remainder portion of the binary representation of the plaintext data element comprises one or more bytes defined by the least significant bits of the binary representation of the plaintext data element.

In a further possible implementation form of the third aspect, the processor of the data storage server is further configured to receive at least one of the encrypted encryption key and the encrypted MAC key from the client device. In an implementation form, the data storage server is configured to use the encrypted encryption key as the identifier of the encryption key for storing the data, including the plurality of cyphertext data elements, on the basis of the identifier in the database, in particular in the table of the database.

In a further possible implementation form of the third aspect, for processing a data query of the data, including the plurality of cyphertext data elements, stored in the database of the data storage server, wherein the data query is defined by at least one query value, the processor of the data storage server is further configured to:
receive at least one first query MAC of a first portion of a binary representation of the at least one query value based on the MAC key, wherein the first portion comprises one or more of most significant bits of the binary representation of the query value and the binary representation of the query value further comprises a complementary remainder portion defined by the remaining least significant bits of the binary representation of the query value;
select, on the basis of the first query MAC, one or more data buckets stored in the database; and
provide the one or more data buckets to the client device, wherein each data bucket comprises a data bucket header and encrypted data bucket content.

In a further possible implementation form of the third aspect, for each data bucket, the data bucket content further comprises, for each cyphertext data element of the data bucket content, a storage location identifier, in particular a row identifier, for identifying a storage location of data associated with the respective cyphertext data element in the database, wherein, for retrieving data associated with the data elements of the queried range from the database, the processor of the data storage server is further configured to retrieve, for one or more data elements matching the data query, on the basis of the storage location identifier, the data associated with the one or more data elements from the database and send the data to the client device.

According to a fourth aspect, a method of operating a data storage server is provided, the method comprising the steps of:
receiving from a client device a first message authentication code, MAC, of a first portion of a binary representation of a plaintext data element, based on a MAC key, wherein the first portion comprises one or more of most significant bits of the binary representation of the plaintext data element and the binary representation of the plaintext data element further comprises a remainder portion that is complementary to the first portion, the remainder portion comprising the remaining least significant bits of the binary representation of the plaintext data element;
selecting, on the basis of the first MAC, a data bucket stored in a database of the data storage server;
providing the data bucket to the client device, wherein the data bucket comprises a data bucket header and encrypted data bucket content;
receiving the data bucket with an updated encrypted data bucket content from the client device; and
storing the data bucket with the updated encrypted data bucket content in the database, wherein the updated encrypted data bucket content comprises the remainder portion of the binary representation of the plaintext data element in encrypted form based on the encryption key.

The method according to the fourth aspect of the present disclosure can be performed by the data storage server according to the third aspect of the present disclosure. Thus, further features of the method according to the fourth aspect of the present disclosure result directly from the functionality of the data storage server according to the third aspect of the present disclosure as well as its different implementation forms described above and below.

According to a fifth aspect, a computer program product comprising a non-transitory computer-readable storage medium for storing program code which causes a computer or a processor to perform the method according to the second aspect or the method according to the fourth aspect, when the program code is executed by the computer or the processor, is provided.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 is a schematic diagram illustrating a data storage system according to an embodiment, including a plurality of client devices according to an embodiment and a data storage server operating a database according to an embodiment;
Fig. 2 is a schematic diagram illustrating an example of a split of a data element into a first MSB portion and a complementary LSB remainder portion implemented by a client device according to an embodiment;
Fig. 3 illustrates an exemplary table used by a data storage server for storing security sensitive data according to an embodiment;
Fig. 4 is a schematic diagram illustrating an index tree structure implemented by a client device according to an embodiment and a data storage server for storing and/or retrieving security sensitive data according to an embodiment;
Fig. 5 is a schematic diagram illustrating a distribution of different data elements to different data buckets based on the respective MSB portion implemented by a client device according to an embodiment and a data storage server for storing and/or retrieving security sensitive data according to an embodiment;
Fig. 6 is a sequence diagram illustrating interactions between a client device according to an embodiment, a data storage server according to an embodiment, and a key management server for retrieving data from the data storage server;
Fig. 7 is a flow diagram illustrating a method for storing data of a client device in a database of a remote data storage server according to an embodiment; and
Fig. 8 is a flow diagram illustrating a method of operating a data storage server with a database for storing data of a client device according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

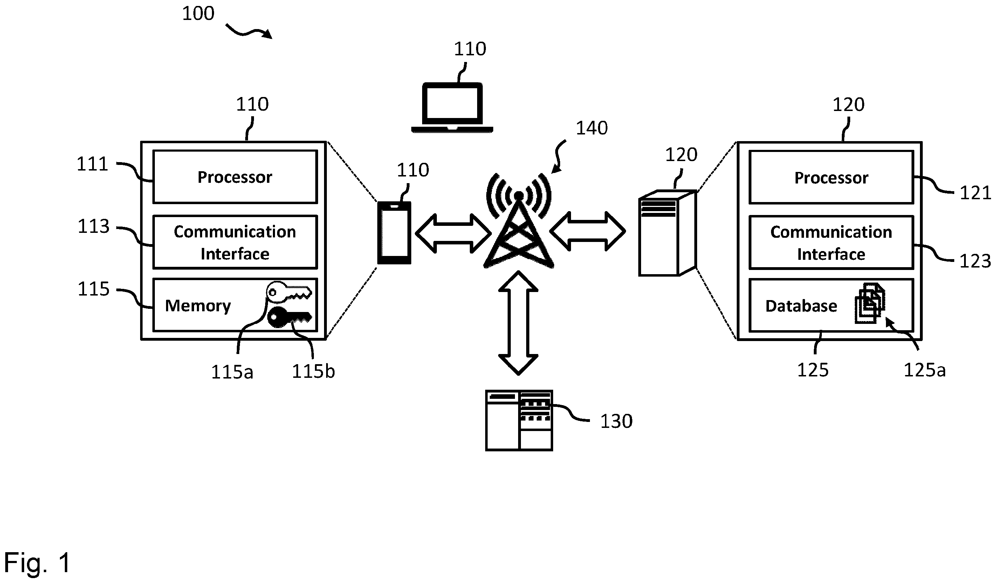

Figure 1 is a schematic diagram illustrating a data storage system 100 according to an embodiment. As will be described in more detail below, the data storage system 100 comprises a plurality of client or user devices 110, such as smart phones, smart watches, tablet computers, laptop computers, desktop computers or other types of IoT devices, one or more remote data storage servers 120 operating a database 125 and a key management server 130. In the following detailed embodiments of the client device 110 and the data storage server 120 will be described, where the database 125 is implemented as a relational database 125, for instance, a SQL based relational database 125. In these embodiments, as will be described in more detail below the data storage server 120 is configured to store security sensitive data in one or more encrypted columns of one or more tables of the relational database 125. As used herein, an encrypted column of a table of the relational database 125 is a column having column elements being encrypted with the one or more encryption keys (for instance, with different encryption keys of different client devices 110). For instance, a first column element may be encrypted with the encryption key of a first client device 110, while a second column element may be encrypted with the encryption key of a second client device 110.

It will be appreciated, however, that the data storage server 120 may comprise a non-relational database 125 and the client device 110 may be configured to operate therewith, wherein the security sensitive data is stored in an encrypted data structure other than an encrypted column of a table. For instance, in an embodiment, the database 125 may be implemented as a MongoDB database 125. For such an embodiment, the data storage server 120 may be configured to store the security sensitive data in one or more encrypted fields of the MongoDB database 125.

As illustrated in figure 1, the plurality of client devices 110, the one or more remote data storage servers 120, and the key management server 130 may be configured to communicate with each other via a wireless, e.g. cellular and/or wired communication network 140. In an embodiment, the one or more remote data storage server 120 may be one or more cloud storage servers 120 configured to communicate with the client devices 110 via the Internet.

As illustrated in figure 1, the client device 110 may comprise a processor 111 for processing and generating data, a communication interface 113, including, for instance, an antenna, for exchanging data with the other components of the data storage system 100, and a non-transitory memory 115 for storing data. The processor 111 of the client device 110 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The non-transitory memory 115 may store data, such as electronic keys and executable program code which, when executed by the processor 111, causes the client device 110 to perform the functions, operations and methods described herein. The communication interface 113 may comprise a wired or wireless communication interface 113. Likewise, the data storage server 120 may comprise a processor 121 for processing and generating data, a communication interface 123 for exchanging data with the other components of the data storage system 100 as well as the database 125 for storing data.

As will be described in more detail below, the client device 110 is configured to build an index at the data storage server 120 while maintaining complete privacy of the security sensitive data. The index may be used by the data storage server 120 to conduct range queries and order by queries. For processing such queries the client device 110 is configured to assist the remote data storage server 120 in identifying the correct and accurate query results without sacrificing the security of the security sensitive data stored in the database 125 of the remote data storage server 120.

To this end, embodiments make use of a new type of index, which allows the remote data storage server 120 to run queries on encrypted data without actually knowing the data. As will be described in more detail below, in an embodiment, the client device 110 is configured to convert the MSB (most significant bits) portion of a sensitive data element to a MAC value, which gets exposed to the remote data storage server 120 only by means of this MAC value. In an embodiment, the data storage server 120 is configured to use the MAC value as a key in the index for identifying the data. In an embodiment, the client device 110 is further configured to store the LSB (least significant bits) portion of the sensitive data encrypted in the index, wherein the encryption key 115a is only known to the client device 110.

More specifically, the client device 110 is configured to store data 125a in the database 125 of the remote data storage server 120, wherein the data 125a comprises a plurality of security sensitive plaintext data elements. The plurality of plaintext data elements can be queried in plaintext and may comprise, for instance, numerical values, such as integer values, real values, floating point values and the like, and/or textual data, such as letter strings. Although in the following detailed embodiments will be described in the context of plaintext data elements in the form of plaintext numerical values, it will be appreciated that these embodiments apply to apply to other types of plaintext data elements that can be queried as well, such as textual data.

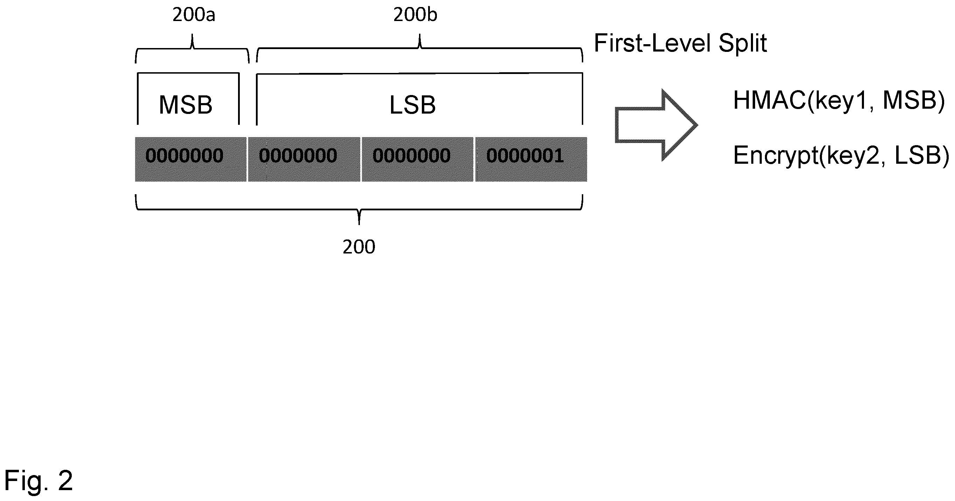

For each of the plurality of plaintext numerical values, the client device 110 is configured to generate with a MAC key 115b (which may be stored in the memory 115 of the client device 110) at least one first MAC of a first portion 200a of a binary representation 200 of the data element, e.g. the plaintext numerical value. A binary representation 200 of an exemplary plaintext numerical value is illustrated in figure 2. As illustrated in figure 2, the first portion 200a of the binary representation 200 of the plaintext numerical value comprises one or more of the most significant bits of the binary representation 200, namely the 8 most significant bits, i.e. the most significant byte of the binary representation 200. In addition to the first portion 200a the binary representation 200 of the plaintext numerical value comprises a complementary remainder portion 200b defined by the remaining least significant bits of the binary representation 200 of the plaintext numerical value. In the exemplary embodiment illustrated in figure 2, the complementary remainder portion 200b of the binary representation 200 of the plaintext numerical value comprises the 24 least significant bits, i.e. the last three least significant bytes of the binary representation 200 of the plaintext numerical value. As illustrated in figure 2, in an embodiment, the MAC generated by the client device 110 may be a hash-based message authentication code, HMAC.

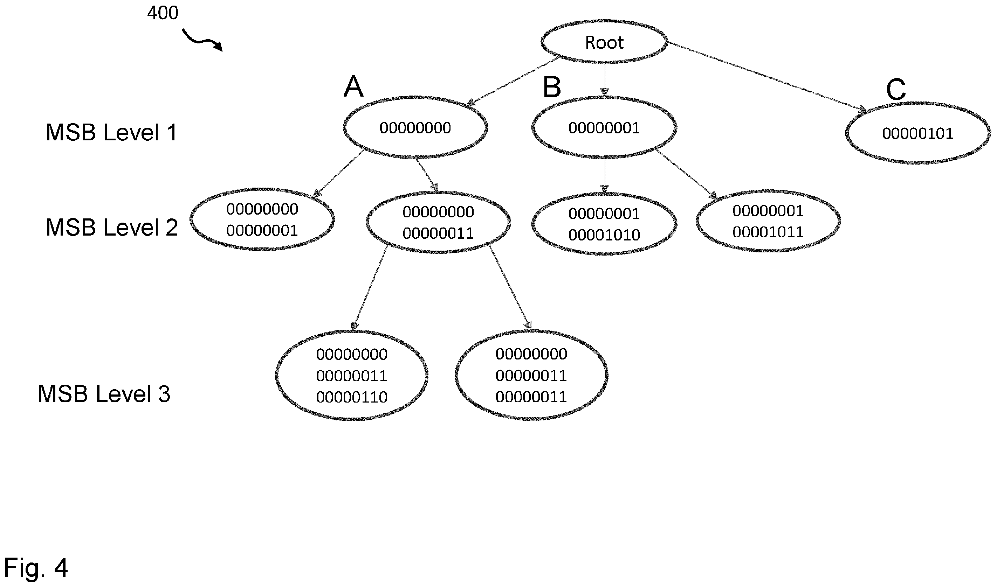

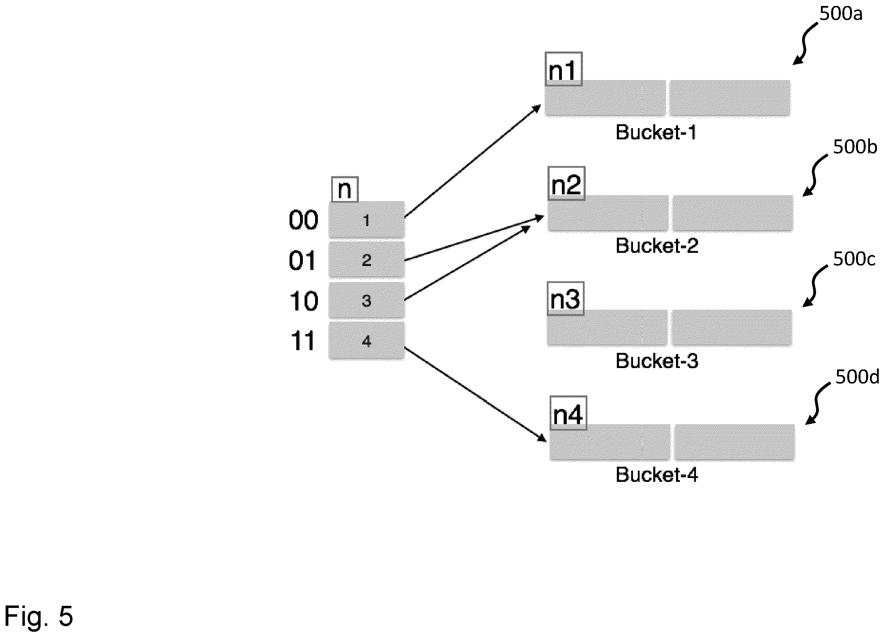

Moreover, the client device 110 is configured to store the remainder portion 200b of the binary representation 200 of the plaintext numerical value in encrypted form based on an encryption key 115a (which may be stored in the memory 115 of the client device 110) in a data bucket 500a-d in the database 125 of the remote data storage server 120. As will be described in more detail in the context of figures 4 and 5 further below, the data storage server 120 is configured to identify the data bucket 500a-d by the at least one first MAC of the first portion 200a of the binary representation 200 of the plaintext numerical value.

In an embodiment, the client device 110 is configured to retrieve on the basis of the at least one first MAC of the first portion 200a (e.g. the most significant byte) of the binary representation 200 of the plaintext numerical value the data bucket 500a-d identified by the data storage server 120 using the at least one first MAC. In an embodiment, each data bucket 500a-d comprises a data bucket header and encrypted data bucket content, wherein the encrypted data bucket content comprises one or more encrypted remainder portions (such as the remainder portion 200b illustrated in figure 2) of binary representations of one or more plaintext numerical values already stored in the database 125, wherein the one or more plaintext numerical values have the same MSB portion and, thus, the same first MAC.

In an embodiment, the client device 110 is configured to decrypt the content of the data bucket 500a-d identified by the data storage server 120 with the encryption key 115a for obtaining the data bucket content in plaintext. Moreover, in an embodiment, the client device 110 is configured to add the remainder portion 200b of the binary representation 200 of the plaintext numerical value to be stored in the database 125 to the data bucket content in plaintext for obtaining an updated data bucket content in plaintext. In an embodiment, the client device 110 is further configured to encrypt the updated data bucket content in plaintext with the encryption key 115a and send the data bucket 500a-d with the encrypted updated data bucket content to the data storage server 120. The data storage server 120, in turn, is configured to store the updated data bucket 500a-d (including the encrypted LSB portion of the new numerical value) in the database 125.

Complementary to the client device 110, the data storage server 120 is configured to receive for each of the plurality of plaintext numerical values from the client device 110 the respective first MAC of the first portion 200a of the binary representation 200 of the respective plaintext numerical value. Moreover, the data storage server 120 is configured to select, i.e. identify on the basis of the first MAC a data bucket 500a-d stored in the database 125 and provide the identified data bucket 500a-d to the client device 110. Moreover, the data storage server 120 is configured to receive the updated data bucket 500a-d with an updated encrypted data bucket content from the client device 110 and to store the updated data bucket 500a-d with the updated encrypted data bucket content in the database 125. As already described above in the context of the client device 110, the updated encrypted data bucket content comprises the remainder portion 200b of the binary representation 200 of the plaintext numerical value in encrypted form based on the encryption key 115a.

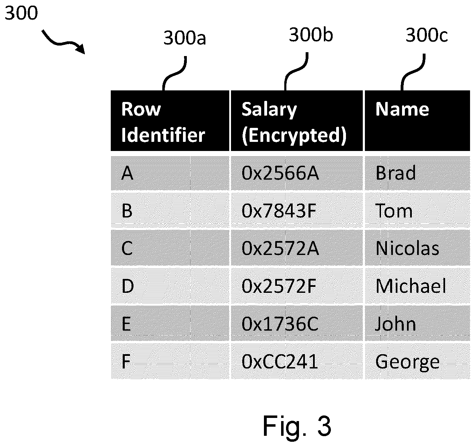

In an embodiment, the client device 110 is further configured to encrypt plaintext numerical values to be stored in the database 125 of the data storage server 120 with the encryption key 115a for obtaining a plurality of cyphertext numerical values, for instance the encrypted salaries 300b illustrated in figure 3. In an embodiment, the client device 110 is configured to encrypt the numerical values to be stored in the database 125 of the data storage server 120 using a random encryption scheme or a deterministic encryption scheme.

Moreover, the client device 110 is configured to send the data 125a, including the plurality of cyphertext numerical values 300b as well as non-encrypted data associated with the numerical values 300b (such as the names 300c illustrated in figure 3), to the data storage server 120 for storing the data 125a in the database 125 of the data storage server 120. In an embodiment, the database 125 is a relational database 125, wherein the data storage server 120 is configured to store the data 125a, including the plurality of cyphertext numerical values 300b as well as non-encrypted data 300c associated with the numerical values 300b, in a table of the relational database 125, such as the table 300 shown in figure 3. As already described above, in an embodiment, the data storage server 120 is configured to store the cyphertext numerical values 300b in an encrypted column of the table 300 of the relational database 125.

In an embodiment, the client device 110 is further configured to send an identifier of the encryption key 115a along with the data 125a, including the plurality of cyphertext numerical values 300b, to the data storage server 120 and the data storage server 120 is configured to store the data 125a on the basis of the identifier of the encryption key 115a in the table 300 of the database 125.

In an embodiment, the client device 110 is further configured to obtain an encrypted version of the encryption key 115a and/or an encrypted version of the MAC key 115b from the remote key management server 130, wherein the encrypted first encryption key 115a and/or the encrypted MAC key 115b is encrypted with a client device master key. In an embodiment, the client device 110 is further configured to send the encrypted first encryption key 115a and/or the encrypted MAC key 115b to the data storage server 120. In an embodiment, the identifier of the encryption key 115a may be the encrypted encryption key 115a used by the data storage server 120 for determining where to store the data 125a, including the plurality of cyphertext numerical values 300b.

In an embodiment, the client device 110 and the data storage server 120 are configured to use, in addition to the first MAC, a second MAC and a third MAC for identifying the relevant data buckets 500a-d in the database 125. In other words, in addition to the first level split of the binary representation 200 of a respective numerical value illustrated in figure 2, the client device 110 and the data storage server 120 are configured to implement a second and third level split, as illustrated by the tree shown in figure 4, which uses different MSB portions as index. In an embodiment, the number of MACs used by the client device 110 and the data storage server 120, i.e. only one MAC or two, three or even more MACs, may depend on the size of the data elements to be stored in the database 125 and/or a desired density, i.e. "range resolution" of the data buckets 500a-d.

More specifically, in an embodiment, the client device is configured to generate with the MAC key 115b a second MAC of a second portion and a third MAC of a third portion of the binary representation 200 of the plaintext numerical value. As can be taken from figure 4, in an embodiment, the second portion of the binary representation 200 of the plaintext numerical value may comprise the 2 most significant bytes of the binary representation 200, while the third portion may comprise the 3 most significant bytes of the binary representation 200. As will be appreciated, in this embodiment with a first, second, and third MAC of increasing portions of the binary representation 200 of the plaintext numerical value, the complementary remainder portion 200b of the least significant bits will become correspondingly smaller. For instance, for a 4-byte binary representation 200 of a numerical value, where the first portion comprises the first most significant byte, the second portion comprises the first two most significant bytes, the third portion comprises the first three most significant bytes of the binary representation 200, and the complementary remainder portion 200b comprises the last byte of the binary representation 200.

On the basis of the first, second, and third MAC received from the client device 110, the data storage server 120 is configured to identify one or more relevant data buckets 500a-d and to provide the one or more identified data buckets 500a-d to the client device 110. To this end, in an embodiment, the data storage server 120 may be configured to implement an index structure, such as, e.g., the tree structure 400 illustrated in figure 4, for identifying the one or more relevant data buckets 500a-d. In other words, in an embodiment, the index structure 400 used by the data storage server 120 is a tree of pointers to data buckets 500a-d. In an embodiment, the tree 400 may be a trie search tree, wherein the key of each tree node is the HMAC of the MSB portion of a numerical value. In an embodiment, the HMAC may be defined as HMAC (key, "bucket min value", "bucket max value"). In an embodiment, the HMAC may be defined as HMAC (key, "MSB value", "MSB Level Range"). In an embodiment, the "MSB Level Range" may be determined by the size of the MSB portion that was used, such as 1, 2, or 3 bytes.

As will be appreciated with respect to the exemplary index tree structure 400 illustrated in figure 4, nodes with keys based on the same "MSB Level" are on the same level in the tree 400. Nodes with the shortest keys are at the top levels. In other words, nodes with keys that are based on 1-byte MSB's are at the top level (after the root). Nodes with keys that start with the key of another node are children of that node. For example, a 2-byte MSB node is the child of a 1-byte MSB node if they both share the same first byte (before the HMAC operation).

As already described above, all of the leaves of the tree structure 400 shown in figure 4 may hold pointers to data buckets 500a-d, which, in turn, contain the encrypted LSB's. In an embodiment, the non-leaf nodes of the tree structure 400 only hold pointers to their siblings. In an embodiment, the data storage server 120 is configured to create nodes of the tree structure 400 in run-time (for instance, in figure 4, only nodes having at least one element are illustrated). In an embodiment, the data storage server 120 may be configured to split each node of the tree structure 400 in two further nodes in order to create more storage space.

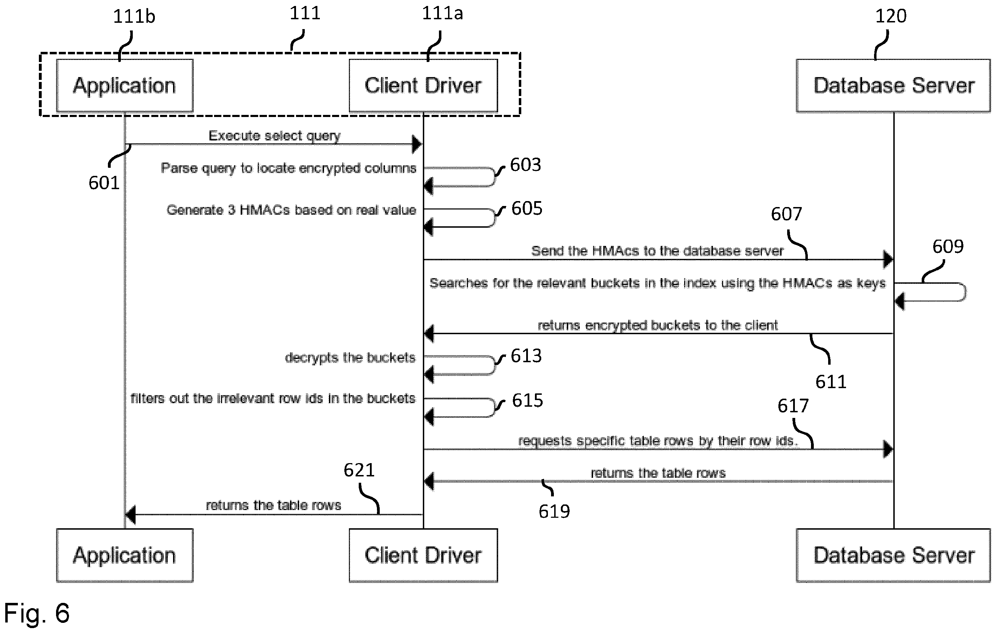

The client device 110 and the data storage server 120 are further configured to process a data query (e.g. a "SELECT" query) of the data 125a, including the plurality of cyphertext numerical values 300b, stored in the database 125. In an embodiment, the data query is defined by at least one query value. As will be described in more detail in the context of figure 6, in an embodiment, for identifying the one or more data buckets 500a-d relevant for the data query, the client device 110 is configured to initially handle the query value in exactly the same manner as a new numerical value to be stored in the database 125. More specifically, like for a new numerical value to be stored in the database, the client device 110 is configured to generate with the MAC key 115b at least one first query MAC of a first portion, e.g. the first most significant byte, of the binary representation of the query value, wherein the first portion comprises one or more of the most significant bits of the binary representation of the query value.

As for the embodiments described above, the client device 110 may further be configured to generate, with the MAC key 115b, a second query MAC of a second portion, e.g. the first two most significant bytes, and a third query MAC of a third portion, e.g. the first three most significant bytes, of the binary representation of the query value and to send the first, second, and third query MAC to the data storage server 120 for identifying the relevant data buckets 500a-d. In other words, based on the first, second, and third query MAC, the data storage server 120 is configured to select, i.e. identify the relevant data bucket(s) 500a-d stored in the database 125 and provide the one or more selected data buckets 500a-d to the client device 110. The client device 110, in turn, is configured to decrypt the encrypted data bucket content of the one or more selected data buckets 500a-d with the encryption key 115a. The client device 110 may generate the respective plaintext binary representation of a respective numerical value contained in the selected data bucket(s) 500a-d by combining the first portion, second portion, and/or third portion of the binary representation of the query value with the decrypted remainder portion, i.e. the decrypted LSB portions of the binary representation of the one or more numerical values stored in the selected data bucket(s) 500a-d. In a further embodiment, for reconstructing the respective plaintext binary representation of a respective numerical value contained in the selected data bucket(s) 500a-d, the MSB portion may be included in encrypted form in the data bucket header of the respective data bucket(s) 500a-d.

In an embodiment, for each data bucket 500a-d, the data bucket content further comprises, for each cyphertext numerical value of the data bucket content, a storage location identifier, such as the row identifiers 300a of the table 300 illustrated in figure 3, for identifying a storage location of the data 300c associated with the respective cyphertext numerical value 300b in the database 125 of the data storage server 120. For retrieving the data 300c associated with the numerical values 300b of the queried range from the database 125, the data storage server 120 is configured to retrieve, for one or more numerical values 300b matching the data query, on the basis of the storage location identifier 300a, the data 300c associated with the one or more numerical values from the database 125 and send the data 300c to the client device 110 as results of the query.

Figure 6 illustrates an embodiment of the interactions between the client device 110, the remote data storage server (referred to as database server) 120, and the remote key management server (KMS) 130 in the process of extracting encrypted security sensitive numerical values 300b (as well as the data 300c associated therewith) from the database 125 of the remote data storage server 120. By way of example, in the embodiment shown in figure 6, the extraction of the data is illustrated in the context of a select query. The interactions between the client device 110, the remote data storage server 120, and the remote key management server 130 comprise the following steps.

Step 601: An application 111b running on the processor 111 of the client device 110 informs a client driver 111a running on the processor 111 of the client device 110 to execute a select query for extracting numerical values 300b, as well as the data 300c associated therewith, from the relational database 125 of the remote data storage server 120.

Step 603: In response to step 601, the client driver 111a of the client device 110 parses the select query from the application 111b for the column names associated with the numerical values to be extracted from the relational database 125 of the remote data storage server 120. The client driver 111a identifies the column names of the table 300 stored as metadata in the memory 115 of the client device 110 on the basis of the parsed select query.

Step 605: The client driver 111a of the client device 110 generates, on the basis of the HMAC key 115b, the first HMAC of the most significant byte 200a, a second HMAC of the two most significant bytes, and a third HMAC of the three most significant bytes of the binary representation 200 of the query value.

Step 607: The client driver 111a of the client device 110 sends the first HMAC, the second HMAC, and the third HMAC to the data storage server 120.

Step 609: The data storage server 120 searches, on the basis of the HMACs received from the client device 110, the database 125 for the relevant data bucket(s) 500a-d, i.e. the one or more data buckets 500a-d identified by the three HMACs.

Step 611: The data storage server 120 returns the identified data buckets 500a-d with the encrypted data bucket content to the client driver 111a of the client device 110.

Step 613: The client driver 111a of the client device 110 decrypts the encrypted data bucket content of the data bucket(s) 500a-d received from the data storage server 120.

Step 615: On the basis of the decrypted complementary LSB remainder portions, the client driver 111a of the client device 110 filters out the irrelevant row identifiers.

Step 617: The client driver 111a of the client device 111 sends a request to the data storage server 120 for extracting the table rows of the table 300 identified by the row identifiers 300a determined in step 615.

Step 619: The data storage server 120 provides the requested table rows of the table 300 to the client device 110, including the cyphertext numerical values 300b, as well as the associated data 300c of these rows.

Step 621: The client driver 111a of the client device 110 forwards the requested table rows to the application 111b.

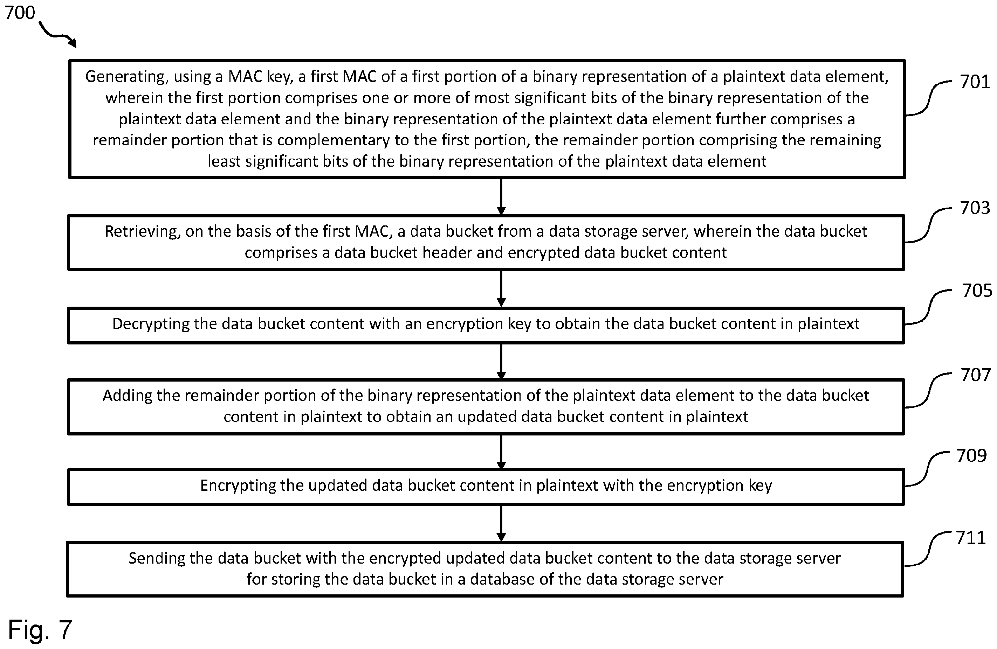

Figure 7 is a flow diagram of a method 700 for storing data 125a of the client device 110 in the database 125 of the remote data storage server 120. The method 700 comprises the following steps, which are executed by the client device 110.

Step 701: generating, with the MAC key 115b, at least one first MAC of a first portion 200a of a binary representation 200 of the plaintext data element, e.g. numerical value, wherein the first portion 200a comprises one or more of the most significant bits of the binary representation 200 of the plaintext data element and wherein the binary representation 200 of the plaintext data element further comprises a complementary remainder portion 200b defined by the remaining least significant bits of the binary representation 200 of the plaintext data element.

Step 703: retrieving, on the basis of the first MAC, a data bucket from the data storage server 120, wherein the data bucket 500a-d comprises a data bucket header and encrypted data bucket content.

Step 705: decrypting the data bucket content with the encryption key 115a to obtain the data bucket content in plaintext.

Step 707: adding the remainder portion 200b of the binary representation 200 of the plaintext data element to the data bucket content in plaintext to obtain an updated data bucket content in plaintext.

Step 709: encrypting the updated data bucket content in plaintext with the encryption key 115a.

Step 711: sending the data bucket 500a-d with the encrypted updated data bucket content to the data storage server 120 for storing the data bucket 500a-d in the database 125 of the data storage server 120.

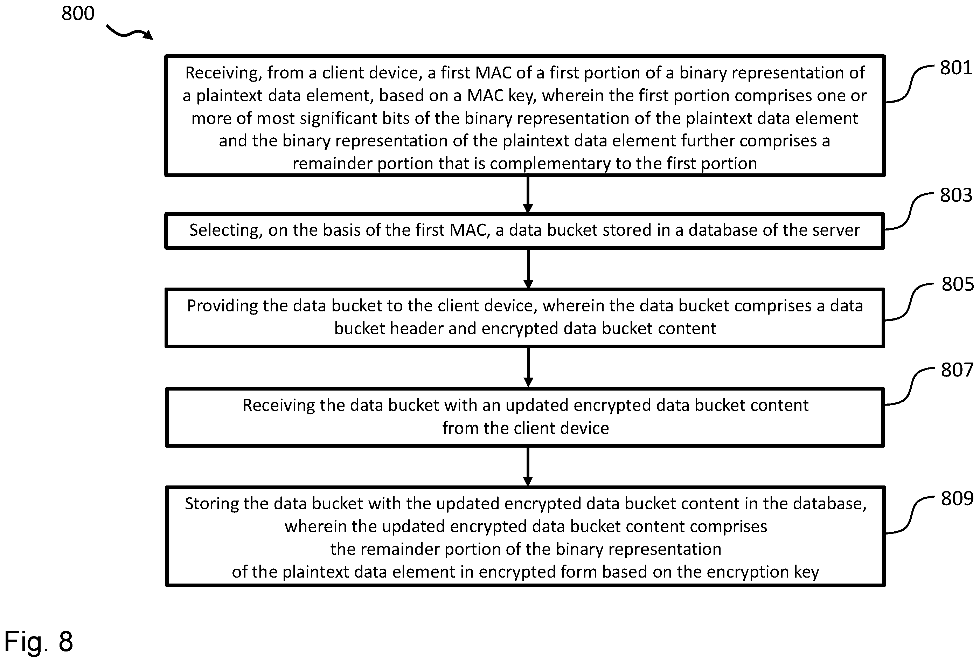

Figure 8 is a flow diagram illustrating a method 800 of operating the data storage server 120 with the database 125 according to an embodiment. The method 800 comprises the following steps, which are executed by the data storage server 120.

Step 801: receiving, by the data storage server 120, from the client device 110, a first MAC of a first portion 200a of a binary representation 200 of a plaintext data element, e.g. numerical value based on a MAC key 115b, wherein the first portion 200a comprises one or more of the most significant bits of the binary representation 200 of the plaintext data element and wherein the binary representation 200 of the plaintext data element further comprises a complementary remainder portion 200b defined by the remaining least significant bits of the binary representation 200 of the plaintext data element.

Step 803: selecting, by the data storage server 120, on the basis of the first MAC, a data bucket 500a-d stored in the database 125.

Step 805: providing the data bucket 500a-d to the client device 110, wherein the data bucket 500a-d comprises a data bucket header and encrypted data bucket content.

Step 807: receiving the data bucket 500a-d with an updated encrypted data bucket content from the client device 110.

Step 809: storing the data bucket 500a-d with the updated encrypted data bucket content in the database 125, wherein the updated encrypted data bucket content comprises the remainder portion 200b of the binary representation 200 of the plaintext data element in encrypted form based on the encryption key 115a.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A client device (110), comprising a processor (111) configured to:
obtain data (125a) comprising a plurality of plaintext data elements; and, for a plaintext data element of the plurality of plaintext data elements:
generate, using a message authentication code, MAC, key (115b), a first MAC of a first portion (200a) of a binary representation (200) of the plaintext data element, wherein the first portion (200a) comprises one or more of most significant bits of the binary representation (200) of the plaintext data element and the binary representation (200) of the plaintext data element further comprises a remainder portion (200b) that is complementary to the first portion (200a), the remainder portion (200b) comprising the remaining least significant bits of the binary representation (200) of the plaintext data element;
retrieve, on the basis of the first MAC, a data bucket (500a-d) from a data storage server (120), wherein the data bucket (500a-d) comprises a data bucket header and encrypted data bucket content;
decrypt the encrypted data bucket content with an encryption key (115a) to obtain the data bucket content in plaintext;
add the remainder portion (200b) of the binary representation (200) of the plaintext data element to the data bucket content in plaintext to obtain an updated data bucket content in plaintext;
encrypt the updated data bucket content in plaintext with the encryption key (115a); and
send the data bucket (500a-d) with the encrypted updated data bucket content to the data storage server (120) for storing the data bucket (500a-d) in a database (125) of the data storage server (120).

2. The client device (110) of claim 1, wherein the processor (111) is further configured, for the plaintext data element of the plurality of plaintext data elements, to:
generate, using the MAC key (115b), a second MAC of a second portion of the binary representation (200) of the plaintext data element, wherein the second portion comprises one or more further most significant bits of the binary representation (200) of the plaintext data element than the first portion (200a) and the remainder portion (200b) of the binary representation (200) of the plaintext data is complementary to the second portion (200a); and
retrieve the data bucket (500a-d), on the basis of the first MAC and the second MAC, from the data storage server (120).

3. The client device (110) of claim 2, wherein the processor (111) is further configured, for the plaintext data element of the plurality of plaintext data elements, to:
generate, using the MAC key (115b), a third MAC of a third portion of the binary representation (200) of the plaintext data element, wherein the third portion comprises one or more further most significant bits of the binary representation (200) of the plaintext data element than the second portion and the remainder portion (200b) of the binary representation (200) of the plaintext data element is complementary to the third portion; and
retrieve the data bucket (500a-d), on the basis of the first MAC, the second MAC, and the third MAC, from the data storage server (120).

4. The client device (110) of any one of the preceding claims, wherein the processor (111) is further configured to:
encrypt the plurality of plaintext data elements with the encryption key (115a) to obtain a plurality of cyphertext data elements (300b); and
send the data (125a), including the plurality of cyphertext data elements (300b), to the data storage server (120) for storing the data (125a) in the database (125).

5. The client device (110) of claim 4, wherein the processor (111) is further configured to send an identifier of the encryption key (115a) with the data (125a), including the plurality of cyphertext data elements (300b), to the data storage server (120) for storing the data (125a), on the basis of the identifier of the encryption key (115a), in the database (125).

6. A method (700) of operating a client device (110), the method (700) comprising:
obtaining data (125a) comprising a plurality of plaintext data elements; and, for a plaintext data element of the plurality of plaintext data elements:
generating (701), using a message authentication code, MAC, key (115b), a first MAC of a first portion (200a) of a binary representation (200) of the plaintext data element, wherein the first portion (200a) comprises one or more of most significant bits of the binary representation (200) of the plaintext data element and the binary representation (200) of the plaintext data element further comprises a remainder portion (200b) that is complementary to the first portion (200a), the remainder portion (200b) comprising the remaining least significant bits of the binary representation (200) of the plaintext data element;
retrieving (703), on the basis of the first MAC, a data bucket (500a-d) from a data storage server (120), wherein the data bucket (500a-d) comprises a data bucket header and encrypted data bucket content;
decrypting (705) the encrypted data bucket content with an encryption key (115a) to obtain the data bucket content in plaintext;
adding (707) the remainder portion (200b) of the binary representation (200) of the plaintext data element to the data bucket content in plaintext to obtain an updated data bucket content in plaintext;
encrypting (709) the updated data bucket content in plaintext with the encryption key (115a); and
sending (711) the data bucket (500a-d) with the encrypted updated data bucket content to the data storage server (120) for storing the data bucket (500a-d) in a database (125) of the data storage server (120).

7. A data storage server (120), comprising a processor (121) configured to:
receive, from a client device (110), a first message authentication code, MAC, of a first portion (200a) of a binary representation (200) of a plaintext data element based on a MAC key (115b), wherein the first portion (200a) comprises one or more of most significant bits of the binary representation (200) of the plaintext data element and the binary representation (200) of the plaintext data element further comprises a remainder portion (200b) that is complementary to the first portion (200a), the remainder portion (200b) comprising the remaining least significant bits of the binary representation (200) of the plaintext data element;
select, on the basis of the first MAC, a data bucket (500a-d) stored in a database (125) of the data storage server (120);
provide the data bucket (500a-d) to the client device (110), wherein the data bucket (500a-d) comprises a data bucket header and encrypted data bucket content;
receive the data bucket (500a-d) with an updated encrypted data bucket content from the client device (110); and
store the data bucket (500a-d) with the updated encrypted data bucket content in the database (125), wherein the updated encrypted data bucket content comprises the remainder portion (200b) of the binary representation (200) of the plaintext data element in encrypted form based on an encryption key (115a).

8. The data storage server (120) of claim 7, wherein the processor (121) is further configured to:
receive, from the client device (110), a second MAC of a second portion of the binary representation (200) of the plaintext data element based on the MAC key (115b), wherein the second portion comprises one or more further most significant bits of the binary representation (200) of the plaintext data element than the first portion and the remainder portion (200b) of the binary representation (200) of the plaintext data element is complementary to the second portion;
select, on the basis of the first MAC and the second MAC, the data bucket (500a-d) stored in the database (125); and
provide the data bucket (500a-d) to the client device (110).

9. The data storage server (120) of claim 8, wherein the processor (121) is further configured to:
receive, from the client device (110), a third MAC of a third portion of the binary representation (200) of the plaintext data element based on the MAC key (115b), wherein the third portion comprises one or more further most significant bits of the binary representation (200) of the plaintext data element than the second portion and the remainder portion (200b) of the binary representation (200) of the plaintext data element is complementary to the third portion;
select, on the basis of the first MAC, the second MAC, and the third MAC, the data bucket (500a-d) stored in the database (125); and
provide the data bucket (500a-d) to the client device (110).

10. The data storage server (120) of any one of claims 7 to 9, wherein the processor (121) is further configured to:
receive data (125a), including a plurality of cyphertext data elements (300b) encrypted with the encryption key (115a), from the client device (110); and
store the data (125a) in the database (125).

11. The data storage server (120) of claim 10, wherein the processor (121) is further configured to:
receive an identifier of the encryption key (115a) with the data (125a), including the plurality of cyphertext data elements (300b), from the client device (110); and
store the data (125a), on the basis of the identifier of the encryption key (115a), in the database (125).

12. The data storage server (120) of claim 10 or 11, wherein the database (125) is a relational database (125) and the processor (121) is further configured to store the data (125a), including the plurality of cyphertext data elements (300b), in a table (300) of the relational database (125).

13. A method (800) of operating a data storage server (120), the method (800) comprising:
receiving (801), from a client device (110), a first message authentication code, MAC, of a first portion (200a) of a binary representation (200) of a plaintext data element, based on a MAC key (115b), wherein the first portion (200a) comprises one or more of most significant bits of the binary representation (200) of the plaintext data element and the binary representation (200) of the plaintext data element further comprises a remainder portion (200b) that is complementary to the first portion (200a), the remainder portion (200b) comprising the remaining least significant bits of the binary representation (200) of the plaintext data element;
selecting (803), on the basis of the first MAC, a data bucket (500a-d) stored in a database (125) of the data storage server (120);
providing (805) the data bucket (500a-d) to the client device (110), wherein the data bucket (500a-d) comprises a data bucket header and encrypted data bucket content;
receiving (807) the data bucket (500a-d) with an updated encrypted data bucket content from the client device (110); and
storing (809) the data bucket (500a-d) with the updated encrypted data bucket content in the database (125), wherein the updated encrypted data bucket content comprises the remainder portion (200b) of the binary representation (200) of the plaintext data element in encrypted form based on the encryption key (115a).

14. A computer program product comprising a computer-readable storage medium for storing program code which causes a computer or a processor to perform the method (700) of claim 6, when the program code is executed by the computer or the processor.

15. A computer program product comprising a computer-readable storage medium for storing program code which causes a computer or a processor to perform the method (800) of claim 13, when the program code is executed by the computer or the processor.

## Patentansprüche

1. Client-Vorrichtung (110), umfassend einen Prozessor (111), der konfiguriert ist zum:
Erhalten von Daten (125a), die eine Vielzahl von Klartextdatenelementen umfassen; und für ein Klartextdatenelement aus der Vielzahl von Klartextdatenelementen:
Generieren, unter Verwendung eines Nachrichtenauthentifizierungscode(MAC)-Schlüssels (115b) eines ersten MAC eines ersten Abschnitts (200a) einer Binärdarstellung (200) des Klartextdatenelements, wobei der erste Abschnitt (200a) ein oder mehrere der höchstwertigen Bits der Binärdarstellung (200) des Klartextdatenelements umfasst und die Binärdarstellung (200) des Klartextdatenelements ferner einen Restabschnitt (200b) umfasst, der den ersten Abschnitt (200a) ergänzt, wobei der Restabschnitt (200b) die verbleibenden niedrigstwertigen Bits der Binärdarstellung (200) des Klartextdatenelements umfasst;
Abrufen eines Daten-Buckets (500a bis d) von einem Datenspeicherserver (120) auf der Grundlage des ersten MAC, wobei der Daten-Bucket (500a bis d) einen Daten-Bucket-Header und verschlüsselten Daten-Bucket-Inhalt umfasst;
Entschlüsseln des verschlüsselten Daten-Bucket-Inhalts mit einem Verschlüsselungsschlüssel (115a), um den Daten-Bucket-Inhalt in Klartext zu erhalten. Hinzufügen des Restabschnitts (200b) der Binärdarstellung (200) des Klartextdatenelements zum Daten-Bucket-Inhalt in Klartext, um einen aktualisierten Daten-Bucket-Inhalt in Klartext zu erhalten;
Verschlüsseln des aktualisierten Inhalts des Daten-Buckets in Klartext mit dem Verschlüsselungsschlüssel (115a) und
Senden des Daten-Buckets (500a bis d) mit dem verschlüsselten aktualisierten Daten-Bucket-Inhalt an den Datenspeicherserver (120), um den Daten-Bucket (500a bis d) in einer Datenbank (125) des Datenspeicherservers (120) zu speichern.

2. Client-Vorrichtung (110) nach Anspruch 1, wobei der Prozessor (111) ferner für das Klartextdatenelement der Vielzahl von Klartextdatenelementen konfiguriert ist zum:
Generieren eines zweiten MAC eines zweiten Abschnitts der Binärdarstellung (200) des Klartextdatenelements unter Verwendung des MAC-Schlüssels (115b), wobei der zweite Abschnitt ein oder mehrere weitere höchstwertige Bits der Binärdarstellung (200) des Klartextdatenelements umfasst als der erste Abschnitt (200a) und der Restabschnitt (200b) der Binärdarstellung (200) der Klartextdaten den zweiten Abschnitt (200a) ergänzt; und
Abrufen des Daten-Buckets (500a bis d) auf der Grundlage des ersten MAC und des zweiten MAC vom Datenspeicherserver (120).

3. Client-Vorrichtung (110) nach Anspruch 2, wobei der Prozessor (111) ferner für das Klartextdatenelement der Vielzahl von Klartextdatenelementen konfiguriert ist zum:
Generieren eines dritten MAC eines dritten Abschnitts der Binärdarstellung (200) des Klartextdatenelements unter Verwendung des MAC-Schlüssels (115b), wobei der dritte Abschnitt ein oder mehrere weitere höchstwertige Bits der Binärdarstellung (200) des Klartextdatenelements umfasst als der zweite Abschnitt und der Restabschnitt (200b) der Binärdarstellung (200) der Klartextdaten den dritten Abschnitt ergänzt; und
Abrufen des Daten-Buckets (500a bis d) auf der Grundlage des ersten MAC, des zweiten MAC und des dritten MAC vom Datenspeicherserver (120).

4. Client-Vorrichtung (110) nach einem der vorstehenden Ansprüche, wobei der Prozessor (111) ferner konfiguriert ist zum:
Verschlüsseln der Vielzahl von Klartextdatenelementen mit dem Verschlüsselungsschlüssel (115a), um eine Vielzahl von Chiffretextdatenelementen (300b) zu erhalten; und
Senden Sie die Daten (125a), einschließlich der Vielzahl von Chiffretextdatenelementen (300b), an den Datenspeicherserver (120), um die Daten (125a) in der Datenbank (125) zu speichern.

5. Client-Vorrichtung (110) nach Anspruch 4, wobei der Prozessor (111) ferner konfiguriert ist, um eine Kennung des Verschlüsselungsschlüssels (115a) mit den Daten (125a), einschließlich der Vielzahl von Chiffretextdatenelementen (300b), an den Datenspeicherserver (120) zu senden, um die Daten (125a) auf der Grundlage der Kennung des Verschlüsselungsschlüssels (115a) in der Datenbank (125) zu speichern.

6. Verfahren (700) zum Betreiben einer Client-Vorrichtung (110), wobei das Verfahren (700) umfasst:
Erhalten von Daten (125a), die eine Vielzahl von Klartextdatenelementen umfassen; und für ein Klartextdatenelement aus der Vielzahl von Klartextdatenelementen:
Generieren (701), unter Verwendung eines Nachrichtenauthentifizierungscode(MAC)-Schlüssels (115b) eines ersten MAC eines ersten Abschnitts (200a) einer Binärdarstellung (200) des Klartextdatenelements, wobei der erste Abschnitt (200a) ein oder mehrere der höchstwertigen Bits der Binärdarstellung (200) des Klartextdatenelements umfasst und die Binärdarstellung (200) des Klartextdatenelements ferner einen Restabschnitt (200b) umfasst, der den ersten Abschnitt (200a) ergänzt, wobei der Restabschnitt (200b) die verbleibenden niedrigstwertigen Bits der Binärdarstellung (200) des Klartextdatenelements umfasst;
Abrufen (703) eines Daten-Buckets (500a bis d) von einem Datenspeicherserver (120) auf der Grundlage des ersten MAC, wobei der Daten-Bucket (500a bis d) einen Daten-Bucket-Header und verschlüsselten Daten-Bucket-Inhalt umfasst;
Entschlüsseln (705) des verschlüsselten Daten-Bucket-Inhalts mit einem Verschlüsselungsschlüssel (115a), um den Daten-Bucket-Inhalt in Klartext zu erhalten; Hinzufügen (707) des Restabschnitts (200b) der Binärdarstellung (200) des Klartextdatenelements zum Daten-Bucket-Inhalt in Klartext, um einen aktualisierten Daten-Bucket-Inhalt in Klartext zu erhalten;
Verschlüsseln (709) des aktualisierten Inhalts des Daten-Buckets in Klartext mit dem Verschlüsselungsschlüssel (115a) und
Senden (711) des Daten-Buckets (500a bis d) mit dem verschlüsselten aktualisierten Daten-Bucket-Inhalt an den Datenspeicherserver (120), um den Daten-Bucket (500a bis d) in einer Datenbank (125) des Datenspeicherservers (120) zu speichern.

7. Datenspeicherserver (120), umfassend einen Prozessor (121), der konfiguriert ist zum:
Empfangen eines ersten Nachrichtenauthentifizierungscodes (MAC) eines ersten Abschnitts (200a) einer Binärdarstellung (200) eines Klartextdatenelements basierend auf einem MAC-Schlüssel (115b) von einer Client-Vorrichtung (110), wobei der erste Abschnitt (200a) ein oder mehrere der höchstwertigen Bits der Binärdarstellung (200) des Klartextdatenelements umfasst und die Binärdarstellung (200) des Klartextdatenelements ferner einen Restabschnitt (200b) umfasst, der den ersten Abschnitt (200a) ergänzt, wobei der Restabschnitt (200b) die verbleibenden niedrigstwertigen Bits der Binärdarstellung (200) des Klartextdatenelements umfasst;
Auswählen eines in einer Datenbank (125) des Datenspeicherservers (120) gespeicherten Daten-Buckets (500a bis d) auf der Grundlage des ersten MAC;
Bereitstellen des Daten-Buckets (500a bis d) für die Client-Vorrichtung (110), wobei der Daten-Bucket (500a bis d) einen Daten-Bucket-Header und verschlüsselten Daten-Bucket-Inhalt umfasst;
Empfangen des Daten-Buckets (500a bis d) mit einem aktualisierten verschlüsselten Daten-Bucket-Inhalt von der Client-Vorrichtung (110) und
Speichern des Daten-Buckets (500a bis d) mit dem aktualisierten verschlüsselten Daten-Bucket-Inhalt in der Datenbank (125), wobei der aktualisierte verschlüsselte Daten-Bucket-Inhalt den Restabschnitt (200b) der Binärdarstellung (200) des Klartextdatenelements in verschlüsselter Form basierend auf einem Verschlüsselungsschlüssel (115a) umfasst.

8. Datenspeicherserver (120) nach Anspruch 7, wobei der Prozessor (121) ferner konfiguriert ist zum:
Empfangen eines zweiten MAC eines zweiten Abschnitts der Binärdarstellung (200) des Klartextdatenelements basierend auf dem MAC-Schlüssel (115b) von der Client-Vorrichtung (110), wobei der zweite Abschnitt ein oder mehrere weitere höchstwertige Bits der Binärdarstellung (200) des Klartextdatenelements umfasst als der erste Abschnitt und der Restabschnitt (200b) der Binärdarstellung (200) des Klartextdatenelements den zweiten Abschnitt ergänzt;
Auswählen des in der Datenbank (125) gespeicherten Daten-Buckets (500a bis d) auf der Grundlage des ersten MAC und des zweiten MAC und
Bereitstellen des Daten-Buckets (500a bis d) an die Client-Vorrichtung (110).

9. Datenspeicherserver (120) nach Anspruch 8, wobei der Prozessor (121) ferner konfiguriert ist zum:
Empfangen eines dritten MAC eines dritten Abschnitts der Binärdarstellung (200) des Klartextdatenelements basierend auf dem MAC-Schlüssel (115b) von der Client-Vorrichtung (110), wobei der dritte Abschnitt ein oder mehrere weitere höchstwertige Bits der Binärdarstellung (200) des Klartextdatenelements umfasst als der zweite Abschnitt und der Restabschnitt (200b) der Binärdarstellung (200) des Klartextdatenelements den dritten Abschnitt ergänzt;
Auswählen des in der Datenbank (125) gespeicherten Datenbehälters (500a-d) auf der Grundlage des ersten MAC, des zweiten MAC und des dritten MAC; und
Bereitstellen des Daten-Buckets (500a bis d) an die Client-Vorrichtung (110).

10. Datenspeicherserver (120) nach einem der Ansprüche 7 bis 9, wobei der Prozessor (121) ferner konfiguriert ist zum:
Empfangen von Daten (125a), einschließlich einer Vielzahl von mit dem Verschlüsselungsschlüssel (115a) verschlüsselten Chiffretextdatenelementen (300b), von der Client-Vorrichtung (110) und
Speichern der Daten (125a) in der Datenbank (125).

11. Datenspeicherserver (120) nach Anspruch 10, wobei der Prozessor (121) ferner konfiguriert ist zum:
Empfangen einer Kennung des Verschlüsselungsschlüssels (115a) mit den Daten (125a), einschließlich der Vielzahl von Chiffretextdatenelementen (300b), von der Client-Vorrichtung (110); und
Speichern der Daten (125a) auf der Grundlage der Kennung des Verschlüsselungsschlüssels (115a) in der Datenbank (125).

12. Datenspeicherserver (120) nach Anspruch 10 oder 11, wobei die Datenbank (125) eine relationale Datenbank (125) ist und der Prozessor (121) ferner konfiguriert ist, um die Daten (125a), einschließlich der Vielzahl von Chiffretextdatenelementen (300b), in einer Tabelle (300) der relationalen Datenbank (125) zu speichern.

13. Verfahren (800) zum Betreiben eines Datenspeicherservers (120), wobei das Verfahren (800) umfasst:
Empfangen (801) eines ersten Nachrichtenauthentifizierungscodes (MAC) eines ersten Abschnitts (200a) einer Binärdarstellung (200) eines Klartextdatenelements basierend auf einem MAC-Schlüssel (115b) von einer Client-Vorrichtung (110), wobei der erste Abschnitt (200a) ein oder mehrere der höchstwertigen Bits der Binärdarstellung (200) des Klartextdatenelements umfasst und die Binärdarstellung (200) des Klartextdatenelements ferner einen Restabschnitt (200b) umfasst, der den ersten Abschnitt (200a) ergänzt, wobei der Restabschnitt (200b) die verbleibenden niedrigstwertigen Bits der Binärdarstellung (200) des Klartextdatenelements umfasst;
Auswählen (803) eines in einer Datenbank (125) des Datenspeicherservers (120) gespeicherten Daten-Buckets (500a bis d) auf der Grundlage des ersten MAC;
Bereitstellen (805) des Daten-Buckets (500a bis d) für die Client-Vorrichtung (110), wobei der Daten-Bucket (500a bis d) einen Daten-Bucket-Header und verschlüsselten Daten-Bucket-Inhalt umfasst;
Empfangen (807) des Daten-Buckets (500a bis d) mit einem aktualisierten verschlüsselten Daten-Bucket-Inhalt von der Client-Vorrichtung (110) und
Speichern (809) des Daten-Buckets (500a bis d) mit dem aktualisierten verschlüsselten Daten-Bucket-Inhalt in der Datenbank (125), wobei der aktualisierte verschlüsselte Daten-Bucket-Inhalt den Restabschnitt (200b) der Binärdarstellung (200) des Klartextdatenelements in verschlüsselter Form basierend auf dem Verschlüsselungsschlüssel (115a) umfasst.

14. Computerprogrammprodukt, umfassend ein computerlesbares Speichermedium zum Speichern von Programmcode, der einen Computer oder einen Prozessor dazu veranlasst, das Verfahren (700) nach Anspruch 6 auszuführen, wenn der Programmcode vom Computer oder Prozessor ausgeführt wird.

15. Computerprogrammprodukt, umfassend ein computerlesbares Speichermedium zum Speichern von Programmcode umfasst, der einen Computer oder einen Prozessor dazu veranlasst, das Verfahren (800) nach Anspruch 13 auszuführen, wenn der Programmcode vom Computer oder Prozessor ausgeführt wird.

## Revendications

1. Dispositif client (110), comprenant un processeur (111) configuré pour :
obtenir des données (125a) comprenant une pluralité d'éléments de données de texte en clair ; et, pour un élément de données de texte en clair de la pluralité d'éléments de données de texte en clair :
générer, à l'aide d'une clé de code d'authentification de message, MAC (115b), un premier MAC d'une première partie (200a) d'une représentation binaire (200) de l'élément de données de texte en clair, dans lequel la première partie (200a) comprend un ou plusieurs des bits les plus significatifs de la représentation binaire (200) de l'élément de données de texte en clair et la représentation binaire (200) de l'élément de données de texte en clair comprend en outre une partie restante (200b) qui est complémentaire de la première partie (200a), la partie restante (200b) comprenant les bits les moins significatifs restants de la représentation binaire (200) de l'élément de données de texte en clair ;
récupérer, sur la base du premier MAC, un compartiment de données (500a-d) à partir d'un serveur de stockage de données (120), dans lequel le compartiment de données (500a-d) comprend un en-tête de compartiment de données et un contenu de compartiment de données chiffré ;
déchiffrer le contenu de compartiment de données chiffré à l'aide d'une clé de chiffrement (115a) pour obtenir le contenu de compartiment des données de texte en clair ;
ajouter la partie restante (200b) de la représentation binaire (200) de l'élément de données de texte en clair au contenu de compartiment de données en texte en clair pour obtenir un contenu de compartiment de données mis à jour en texte en clair ;
chiffrer le contenu de compartiment de données mis à jour en texte en clair avec la clé de chiffrement (115a) ; et
envoyer le compartiment de données (500a-d) avec le contenu de compartiment de données mis à jour chiffré au serveur de stockage de données (120) pour stocker le compartiment de données (500a-d) dans une base de données (125) du serveur de stockage de données (120).

2. Dispositif client (110) selon la revendication 1, dans lequel le processeur (111) est en outre configuré, pour l'élément de données de texte en clair de la pluralité d'éléments de données de texte en clair, pour :
générer, à l'aide de la clé MAC (115b), un deuxième MAC d'une deuxième partie de la représentation binaire (200) de l'élément de données de texte en clair, dans lequel la deuxième partie comprend un ou plusieurs bits les plus significatifs supplémentaires de la représentation binaire (200) de l'élément de données de texte en clair par rapport à la première partie (200a) et la partie restante (200b) de la représentation binaire (200) des données de texte en clair est complémentaire de la deuxième partie (200a) ; et
récupérer le compartiment de données (500a-d), sur la base du premier MAC et du deuxième MAC, à partir du serveur de stockage de données (120).

3. Dispositif client (110) selon la revendication 2, dans lequel le processeur (111) est en outre configuré, pour l'élément de données de texte en clair de la pluralité d'éléments de données de texte en clair, pour :
générer, à l'aide de la clé MAC (115b), un troisième MAC d'une troisième partie de la représentation binaire (200) de l'élément de données de texte en clair, dans lequel la troisième partie comprend un ou plusieurs bits les plus significatifs supplémentaires de la représentation binaire (200) de l'élément de données de texte en clair par rapport à la deuxième partie et la partie restante (200b) de la représentation binaire (200) de l'élément de données de texte en clair est complémentaire de la troisième partie ; et
récupérer le compartiment de données (500a-d), sur la base du premier MAC, du deuxième MAC et du troisième MAC, à partir du serveur de stockage de données (120).

4. Dispositif client (110) selon l'une quelconque des revendications précédentes, dans lequel le processeur (111) est en outre configuré pour :
chiffrer la pluralité d'éléments de données de texte en clair avec la clé de chiffrement (115a) pour obtenir une pluralité d'éléments de données de cryptogramme (300b) ; et
envoyer les données (125a), y compris la pluralité d'éléments de données de cryptogramme (300b), au serveur de stockage de données (120) pour stocker les données (125a) dans la base de données (125).

5. Dispositif client (110) selon la revendication 4, dans lequel le processeur (111) est en outre configuré pour envoyer un identifiant de la clé de chiffrement (115a) avec les données (125a), y compris la pluralité d'éléments de données de cryptogramme (300b), au serveur de stockage de données (120) pour stocker les données (125a), sur la base de l'identifiant de la clé de chiffrement (115a), dans la base de données (125).

6. Procédé (700) de fonctionnement d'un dispositif client (110), le procédé (700) comprenant :
l'obtention de données (125a) comprenant une pluralité d'éléments de données de texte en clair ; et, pour un élément de données de texte en clair de la pluralité d'éléments de données de texte en clair :
la génération (701), à l'aide d'une clé de code d'authentification de message, MAC (115b), d'un premier MAC d'une première partie (200a) d'une représentation binaire (200) de l'élément de données de texte en clair, dans lequel la première partie (200a) comprend un ou plusieurs des bits les plus significatifs de la représentation binaire (200) de l'élément de données de texte en clair et la représentation binaire (200) de l'élément de données de texte en clair comprend en outre une partie restante (200b) qui est complémentaire de la première partie (200a), la partie restante (200b) comprenant les bits les moins significatifs restants de la représentation binaire (200) de l'élément de données de texte en clair ;
la récupération (703), sur la base du premier MAC, d'un compartiment de données (500a-d) à partir d'un serveur de stockage de données (120), dans lequel le compartiment de données (500a-d) comprend un en-tête de compartiment de données et un contenu de compartiment de données chiffré ;
le déchiffrement (705) du contenu de compartiment de données chiffré avec une clé de chiffrement (115a) pour obtenir le contenu de compartiment de données en texte en clair ;
l'ajout (707) de la partie restante (200b) de la représentation binaire (200) de l'élément de données de texte en clair au contenu de compartiment de données en texte en clair pour obtenir un contenu de compartiment de données mis à jour en texte en clair ;
le chiffrement (709) du contenu de compartiment de données mis à jour en texte clair avec la clé de chiffrement (115a) ; et
l'envoi (711) du compartiment de données (500a-d) avec le contenu de compartiment de données mis à jour chiffré au serveur de stockage de données (120) pour stocker le compartiment de données (500a-d) dans une base de données (125) du serveur de stockage de données (120).

7. Serveur de stockage de données (120), comprenant un processeur (121) configuré pour :
recevoir, à partir d'un dispositif client (110), un premier code d'authentification de message, MAC, d'une première partie (200a) d'une représentation binaire (200) d'un élément de données de texte en clair sur la base d'une clé MAC (115b), dans lequel la première partie (200a) comprend un ou plusieurs des bits les plus significatifs de la représentation binaire (200) de l'élément de données de texte en clair et la représentation binaire (200) de l'élément de données de texte en clair comprend en outre une partie restante (200b) qui est complémentaire de la première partie (200a), la partie restante (200b) comprenant les bits les moins significatifs restants de la représentation binaire (200) de l'élément de données de texte en clair ;
sélectionner, sur la base du premier MAC, un compartiment de données (500a-d) stocké dans une base de données (125) du serveur de stockage de données (120) ; fournir le compartiment de données (500a-d) au dispositif client (110), dans lequel le compartiment de données (500a-d) comprend un en-tête de compartiment de données et un contenu de compartiment de données chiffré ;
recevoir le compartiment de données (500a-d) avec un contenu de compartiment de données chiffré mis à jour à partir du dispositif client (110) ; et
stocker le compartiment de données (500a-d) avec le contenu de compartiment de données chiffré mis à jour dans la base de données (125), dans lequel le contenu de compartiment de données chiffré mis à jour comprend la partie restante (200b) de la représentation binaire (200) de l'élément de données de texte en clair sous forme chiffrée sur la base d'une clé de chiffrement (115a).

8. Serveur de stockage de données (120) selon la revendication 7, dans lequel le processeur (121) est en outre configuré pour :
recevoir, à partir du dispositif client (110), un deuxième MAC d'une deuxième partie de la représentation binaire (200) de l'élément de données de texte en clair sur la base de la clé MAC (115b), dans lequel la deuxième partie comprend un ou plusieurs bits les plus significatifs supplémentaires de la représentation binaire (200) de l'élément de données de texte en clair par rapport à la première partie et la partie restante (200b) de la représentation binaire (200) de l'élément de données de texte en clair est complémentaire de la deuxième partie ;
sélectionner, sur la base du premier MAC et du deuxième MAC, le compartiment de données (500a-d) stocké dans la base de données (125) ; et
fournir le compartiment de données (500a-d) au dispositif client (110).

9. Serveur de stockage de données (120) selon la revendication 8, dans lequel le processeur (121) est en outre configuré pour :
recevoir, à partir du dispositif client (110), un troisième MAC d'une troisième partie de la représentation binaire (200) de l'élément de données de texte en clair sur la base de la clé MAC (115b), dans lequel la troisième partie comprend un ou plusieurs bits les plus significatifs supplémentaires de la représentation binaire (200) de l'élément de données de texte en clair par rapport à la deuxième partie et la partie restante (200b) de la représentation binaire (200) de l'élément de données de texte en clair est complémentaire de la troisième partie ;
sélectionner, sur la base du premier MAC, du deuxième MAC et du troisième MAC, le compartiment de données (500a-d) stocké dans la base de données (125) ; et
fournir le compartiment de données (500a-d) au dispositif client (110).

10. Serveur de stockage de données (120) selon l'une quelconque des revendications 7 à 9, dans lequel le processeur (121) est en outre configuré pour :
recevoir des données (125a), y compris une pluralité d'éléments de données de cryptogramme (300b) avec la clé de chiffrement (115a) à partir du dispositif client (110) ; et
stocker les données (125a) dans la base de données (125).

11. Serveur de stockage de données (120) selon la revendication 10, dans lequel le processeur (121) est en outre configuré pour :
recevoir un identifiant de la clé de chiffrement (115a) avec les données (125a), y compris la pluralité d'éléments de données de cryptogramme (300b), à partir du dispositif client (110) ; et
stocker les données (125a), sur la base de l'identifiant de la clé de chiffrement (115a), dans la base de données (125).

12. Serveur de stockage de données (120) selon la revendication 10 ou 11, dans lequel la base de données (125) est une base de données relationnelle (125) et le processeur (121) est en outre configuré pour stocker les données (125a), y compris la pluralité d'éléments de données de cryptogramme (300b), dans une table (300) de la base de données relationnelle (125).

13. Procédé (800) de fonctionnement d'un serveur de stockage de données (120), le procédé (800) comprenant :
la réception (801), à partir d'un dispositif client (110), d'un premier code d'authentification de message, MAC, d'une première partie (200a) d'une représentation binaire (200) d'un élément de données de texte en clair, sur la base d'une clé MAC (115b), dans lequel la première partie (200a) comprend un ou plusieurs des bits les plus significatifs de la représentation binaire (200) de l'élément de données de texte en clair et la représentation binaire (200) de l'élément de données de texte en clair comprend en outre une partie restante (200b) qui est complémentaire de la première partie (200a), la partie restante (200b) comprenant les bits les moins significatifs restants de la représentation binaire (200) de l'élément de données de texte en clair ;
la sélection (803), sur la base du premier MAC, d'un compartiment de données (500ad) stocké dans une base de données (125) du serveur de stockage de données (120) ; la fourniture (805) du compartiment de données (500a-d) au dispositif client (110), dans lequel le compartiment de données (500a-d) comprend un en-tête de compartiment de données et un contenu de compartiment de données chiffré ;
la réception (807) du compartiment de données (500a-d) avec un contenu de compartiment de données chiffré mis à jour à partir du dispositif client (110) ; et
le stockage (809) du compartiment de données (500a-d) avec le contenu de compartiment de données chiffré mis à jour dans la base de données (125), dans lequel le contenu de compartiment de données chiffré mis à jour comprend la partie restante (200b) de la représentation binaire (200) de l'élément de données de texte en clair sous forme chiffrée sur la base de la clé de chiffrement (115a).

14. Produit-programme informatique comprenant un support de stockage lisible par ordinateur permettant de stocker un code de programme qui amène un ordinateur ou un processeur à réaliser le procédé (700) selon la revendication 6, lorsque le code de programme est exécuté par l'ordinateur ou le processeur.

15. Produit-programme informatique comprenant un support de stockage lisible par ordinateur permettant de stocker un code de programme qui amène un ordinateur ou un processeur à réaliser le procédé (800) selon la revendication 13, lorsque le code de programme est exécuté par l'ordinateur ou le processeur.
